# EUROPÄISCHE PATENTSCHRIFT

(11) **EP 2 694 328 B1**
(45) Veröffentlichungstag und Bekanntmachung des Hinweises auf die Patenterteilung: **22.08.2018**
(21) Anmeldenummer: 12714612.4
(22) Anmeldetag: 30.03.2012
(51) Int. Cl.: B60N 2/24, F16M 11/04, F16C 29/00, F16C 33/32, B64D 11/06, B60N 3/00

(54) **LINEARFÜHRUNG**
LINEAR GUIDE
GUIDE LINÉAIRE

(30) Priorität: 04.04.2011 DE 102011006745
(43) Veröffentlichungstag der Anmeldung: 12.02.2014
(73) Patentinhaber: Accuride International GmbH, 65582 Diez/Lahn (DE)
(72) Erfinder: NEUHAUS, Christoph, 56412 Niederelbert (DE); QUIREIN, Thomas, 65582 Diez (DE)
(74) Vertreter: WSL Patentanwälte Partnerschaft mbB
(86) Internationale Anmeldenummer: PCT/EP2012/055832
(87) Internationale Veröffentlichungsnummer: WO 2012/136594

(56) Entgegenhaltungen:
- WO-A1-03/099076
- US-A- 3 759 587
- US-A- 3 926 397

## Beschreibung

### Gegenstand der Erfindung

Die Erfindung betrifft eine Linearführung mit wenigstens zwei in Längsrichtung gegeneinander verfahrbaren Schienenelementen, wobei jedes Schienenelement Laufflächen aufweist, die mit Laufflächen eines dagegen verfahrbaren Schienenelementes Laufbahnen für die Aufnahme von Wälzkörpern und Gleitkörpern zwischen den jeweils zwei gegeneinander verfahrbaren Schienenelementen ausbilden.

Des Weiteren betrifft die Erfindung einen Ausziehtisch, vorzugsweise für die Befestigung an der Rückenlehne eines Sitzes in einem Verkehrsmittel, wie einem Bahn-, Bus- oder Flugzeugsitz, mit einer Tischplatte und zwei für ein Verfahren der Tischplatte relativ zu der Rückenlehne des Sitzes seitlich an oder unter der Tischplatte montierten Linearführungen gemäß der Erfindung.

### Hintergrund der Erfindung

Linearführungen werden unter anderem im Möbelbau, bei Haushaltsgeräten, im Automobil- und Flugzeugbau, z. B. an verstellbaren Sitzen, Schubladen oder Ausziehtischen, eingesetzt. Aus dem Stand der Technik sind verschiedene Linearführungssysteme bekannt. Je nach Einsatzgebiet werden sehr unterschiedliche Anforderungen gestellt. Bei Schubfächern können dies beispielsweise Leichtgängigkeit des Auszugs und gegebenenfalls hohe Tragkraft sein. Darüber hinaus sollen Linearführungen auch bei häufigen Verfahrvorgängen eines Schubes eine lange Lebensdauer besitzen und ihre Leichtgängigkeit über die Lebensdauer beibehalten.

An den Rückenlehnen der Sitze in Verkehrsmitteln, wie Bahn-, Bus- oder Flugzeugsitzen, sind häufig für die Benutzung durch den dahinter sitzenden Fahrgast Ausziehtische montiert. Bei Nichtbenutzung des Ausziehtisches ist dieser in der Regel an die Rückenlehne herangeklappt und gegen ein Ausklappen verriegelt. Für die Benutzung des Ausziehtisches wird die Verriegelung gelöst und der Ausziehtisch in die Waagerechte von der Rückenlehne des Sitzes weggeklappt. Insbesondere dort, wo in dem Verkehrsmittel die Sitzreihenabstände für einen höheren Komfort groß sind, sind die Ausziehtische zusätzlich noch nach dem Ausklappen in der Waagerechten von der Rückenlehne des Vordersitzes zum dahinter sitzenden Fahrgast verfahrbar, um ein bequemes Erreichen und Benutzen des Ausziehtisches zu gewährleisten.

Die Anforderungen an die Verfahrbarkeit solcher Ausziehtische in Verkehrsmitteln sind insbesondere im Bereich komfortablerer Beförderungsklassen hoch. Das Verfahren des Ausziehtisches soll leichtgängig und zuverlässig und mit einer für den Benutzer angenehmen Haptik erfolgen. Bekannte Verfahrsysteme für Ausziehtische im preisgünstigen Segment nutzen einfache Gleitführungen, bei denen die Seiten des Ausziehtisches in einer einfachen Führungsnut mit Auszugsanschlägen verfahren werden. Darüber hinaus ist es bekannt, Linearführungen für das Verfahren von Ausziehtischen einzusetzen, bei denen kugelgelagerte Teleskopführungen zum Einsatz kommen, die einen hohen Verfahrkomfort, Leichtgängigkeit und Laufruhe gewährleisten. US 3,759,587 offenbart eine kugelgelagerte Teleskopführung, die innere unterstützende Strukturen aufweist, die die Linearführung besonders biegefest machen, insbesondere bei vertikaler Belastung. Die inneren unterstützenden Elemente sind mit den äußeren Schienenelementen verschweißt und treten bei normaler Funktion der Linearführung nicht miteinander in Kontakt. Gerade die Leichtgängigkeit der kugelgelagerten Teleskopführungen stellt bei der speziellen Anwendung für Ausziehtische in Verkehrsmitteln aber auch einen Nachteil für die Benutzung dar. Da in den Verkehrsmitteln der Raum eng ist, die Verkehrsmittel ständig in Bewegung sind und durch Bremsen und Beschleunigen Kräfte auf den Ausziehtisch wirken, gerät der Ausziehtisch bei sehr leichtgängigen kugelgelagerten Linearführungen auch entsprechend leicht unbeabsichtigt in Bewegung, so dass darauf abgestellte Gegenstände, wie beispielsweise Getränke, nicht stabil gelagert werden und herunterfallen können. Daher werden bislang schwerer gängige Gleitführungen in Verkehrsmitteln bevorzugt eingesetzt, da diese in einer Position auch beim Einwirken von waagerecht wirkenden Kräften durch Bremsen und Beschleunigen des Verkehrsmittels aufgrund der höheren Haftreibung der Gleitelemente stabiler in ihrer Position verbleiben.

Ein großer Nachteil von Gleitführungen, auch solchen, die Gleitelemente zwischen den gegeneinander verfahrbaren Schienenelementen einsetzen, ist ihre Empfindlichkeit gegenüber einer asymmetrischen Belastung in Verfahrrichtung des Ausziehtisches, d.h. wenn der Ausziehtisch nicht an beiden Seiten mit der gleichen Kraft und Geschwindigkeit, sondern außermittig eingeschoben oder ausgezogen wird. Beim außermittigen Schieben kommt es sehr häufig zu einem Verkanten der Gleitführungen, so dass sich die Tischführung dann nur noch sehr schwer oder gar nicht mehr verfahren lässt. Man spricht vom sogenannten "Slipstick"-Effekt.

Weitere Anforderungen an Linearführungen für Ausziehtische in Verkehrsmitteln sind kostengünstige Herstellung, leichte Montierbarkeit und Reparatur ohne hohen Montageaufwand, gegebenenfalls Verrastbarkeit in vorgegebenen Verfahrpositionen, zumindest in der ausgefahrenen Position und eventuell weiteren Zwischenstellungen, eine angenehme Haptik und geräuscharme Führung. Darüber hinaus sollen insbesondere in Flugzeugen die Bauteile alle möglichst ein geringes Gewicht aufweisen, so dass die herkömmlichen Stahlteleskopschienen trotz ihres komfortablen Verfahrverhaltens hier selten zum Einsatz kommen.

### Aufgabe

Der vorliegenden Erfindung lag daher die Aufgabe zugrunde, eine gegenüber dem Stand der Technik verbesserte Linearführung bereitzustellen, die in kompakter Bauweise und mit geringem Gewicht herstellbar ist und insbesondere eine zuverlässige Führung von Ausziehtischen in Verkehrsmitteln mit verminderter Gefahr der Blockierung durch Verkanten bei außermittigem Schieben gewährleistet.

### Beschreibung der Erfindung

Gelöst wird diese Aufgabe durch eine Linearführung mit wenigstens zwei in Längsrichtung gegeneinander verfahrbaren Schienenelementen, wobei jedes Schienenelement Laufflächen aufweist, die mit Laufflächen eines dagegen verfahrbaren Schienenelementes Laufbahnen für die Aufnahme von Wälzkörpern und Gleitkörpern zwischen den zwei gegeneinander verfahrbaren Schienenelementen ausbilden, dadurch gekennzeichnet, dass in jeder Laufbahn zwischen zwei Schienenelementen wenigstens ein Gleitkörper und wenigstens zwei Wälzkörper vorgesehen sind, wobei in Längsrichtung der Laufbahn auf beiden Seiten eines Gleitkörpers jeweils wenigstens ein Wälzkörper angeordnet ist.

Es hat sich überraschend gezeigt, dass eine Linearführung mit einer Kombination aus Wälzkörpern und Gleitkörpern in der erfindungsgemäßen Anordnung eine erheblich verbesserte Sicherheit gegen ein Blockieren der Führung durch Verkanten bei asymmetrischer Belastung in Verfahrrichtung bietet. Darüber hinaus ist die erfindungsgemäße Linearführung zwar leichtgängig, bietet aber dennoch einen Anfangswiderstand (Haftwiderstand) bei Einleitung des Verfahrens der Linearführung, so dass ein daran geführtes Element, wie beispielsweise ein Ausziehtisch, nicht ohne Weiteres bei geringen Beschleunigungskräften in Bewegung gerät, wie sie in einem Verkehrsmittel durch das Bremsen oder Beschleunigen auftreten. Dadurch wird eine erhöhte Sicherheit gegen unbeabsichtigtes Verfahren gewährleistet. Darüber hinaus bietet die erfindungsgemäße Linearführung eine für den Benutzer angenehme Haptik, sie ist sowohl beim Verfahren als auch im Stillstand beim Auftreten äußerer Erschütterungen geräuscharm und klapperfrei. Sie setzt dem Verfahren beispielsweise eines Ausziehtisches einen Anfangs- und auch einen Verfahrwiderstand entgegen, der aber ohne Mühe zu überwinden ist und gleichzeitig eine hohe Sicherheit gegenüber unbeabsichtigtem Verfahren bietet.

Die erfindungsgemäße Linearführung kombiniert die Vorteile von kugelgelagerten und gleitkörpergelagerten Linearführungen, wobei es für die erfindungsgemäß erwünschten Eigenschaften wesentlich ist, dass in einer Laufbahn ein Gleitkörper zu beiden Seiten, d.h. an beiden Stirnflächen, von wenigstens einem Wälzkörper umgeben ist. Dies gewährleistet die Aufnahme der Betriebslast beim Verfahren durch die Wälzkörper und die Funktion des Gleitkörpers (Friktionselement) kommt insbesondere bei hoher Belastung zum Einsatz.

In einer besonders bevorzugten Ausführungsform der erfindungsgemäßen Linearführung sind die Wälzkörper als Kugeln ausgebildet. Alternativ kommen für die erfindungsgemäße Linearführung auch Rollen oder Walzen als Wälzkörper in Betracht, jedoch bieten Kugeln den Vorteil besserer Abrolleigenschaften. In einer weiteren bevorzugten Ausführungsform der erfindungsgemäßen Linearführung sind die Gleitkörper im Wesentlichen zylindrisch mit in Längserstreckung der Laufbahn im Wesentlichen kreisförmigen Querschnitt ausgebildet. Bei dieser Ausführungsform und wenn die Wälzkörper als Kugeln ausgebildet sind, haben Wälzkörper und Gleitkörper in Blickrichtung entlang der Laufbahn beide im Wesentlichen die gleiche Querschnittsform.

In einer weiteren bevorzugten Ausführungsform weisen die Wälzkörper, die vorzugsweise als Kugeln ausgebildet sind, senkrecht zur Längserstreckung der Laufbahn zwischen zwei Laufflächen einen Durchmesser auf, der größer oder gleich, vorzugsweise größer ist als der Durchmesser der Gleitkörper. Bei dieser Ausführungsform sind bei normaler Belastung überwiegend die Wälzkörper mit den zwei Laufflächen der gegeneinander verfahrbaren Schienenelemente in Berührung und tragen Betriebslast beim Verfahren der Linearführung ab. Bei höherer Belastung kommen auch die Außenflächen der Gleitkörper mit den Laufflächen in Kontakt und tragen zusätzliche Last ab.

In einer weiteren bevorzugten Ausführungsform der erfindungsgemäßen Linearführung sind die Wälzkörper aus einem elastischeren und/oder weicheren Material hergestellt als die Gleitkörper. Insbesondere, wenn der Durchmesser der Wälzkörper größer ist als der Durchmesser der Gleitkörper, ist diese Ausführungsform von besonderem Vorteil. Bei geringer oder normaler Belastung wird die Betriebslast durch die Wälzkörper mit etwas größerem Durchmesser als die Gleitkörper abgetragen. Bei höherer Belastung werden die elastischeren und/oder weicheren Wälzkörper geringfügig komprimiert, so dass die Gleitkörper mit etwas geringerem Durchmesser als die Wälzkörper mit den Laufflächen der Schienenelemente in Berührung kommen und so eine höhere Belastung abtragen.

Die Wälzkörper der erfindungsgemäßen Linearführung können wie übliche Wälzkörper bzw. Kugeln von herkömmlichen Linearführungen aus Metall, insbesondere Stahl, hergestellt sein. In einer bevorzugten Ausführungsform der erfindungsgemäßen Linearführung sind die Wälzkörper jedoch aus Kunststoff hergestellt, vorzugsweise aus Polytetrafluorethylen (PTFE), Polyoxymethylen/Polyacetat (POM) oder Polyamid. Die Gleitkörper der erfindungsgemäßen Linearführung können ebenfalls aus Metall hergestellt sein, vorzugsweise aus Messing, da Messing im Kontakt mit metallischen Laufflächen gute Gleiteigenschaften besitzt. In einer alternativen Ausführungsform der erfindungsgemäßen Linearführung sind die Gleitkörper aus Kunststoff hergestellt, vorzugsweise aus Polyetetrafluorethylen (PTFE), Polyoxymethylen/Polyacetat (POM) oder Polyamid. Die vorgenannten Kunststoffmaterialien haben den Vorteil, dass sie im Vergleich zu Metall leicht sind, dennoch eine hohe Stabilität aufweisen und eine gewisse Elastizität bzw. Weichheit zur Realisierung der vorgenannten Vorteile besitzen.

Es ist erfindungsgemäß besonders bevorzugt, dass bei der erfindungsgemäßen Linearführung in jeder Laufbahn zwischen zwei Schienenelementen genau ein Gleitkörper und auf beiden Seiten des Gleitkörpers jeweils wenigstens ein Wälzkörper, vorzugsweise genau ein Wälzkörper, ganz besonders bevorzugt genau eine Kugel, angeordnet ist. Diese Ausführungsform hat den Vorteil eines einfachen Aufbaus mit geringem Gewicht und guten Verfahreigenschaften für die meisten Belastungsanwendungen, wie beispielsweise für Ausziehtische in einem Verkehrsmittel.

In einer alternativen Ausführungsform der erfindungsgemäßen Linearführung, die insbesondere für höhere Betriebslasten als die vorgenannte Ausführungsform vorgesehen ist, sind in jeder Laufbahn zwischen zwei Schienenelementen zwei oder mehr Gleitkörper und auf beiden Seiten jedes Gleitkörpers jeweils wenigstens ein Wälzkörper, vorzugsweise genau ein Wälzkörper, angeordnet. Diese Ausführungsform eignet sich für höhere Lasten, sie erfordert jedoch auch eine längere Anordnung von Wälzkörpern und Gleitkörpern in der Laufbahn, wodurch gegenüber der Ausführungsform mit genau einem Gleitkörper und zwei Wälzkörpern in einer Laufbahn die maximale Verfahrstrecke zwischen zwei Schienenelementen bei gleichen Dimensionen der Gleitkörper und Wälzkörper kürzer ist.

Zweckmäßigerweise sind bei der erfindungsgemäßen Linearführung an den Schienenelementen Auszugs- und Einschubbegrenzer vorgesehen, welche den Verfahrweg zweier Schienenelemente gegeneinander begrenzen, um ein Herausfahren der Wälzkörper und Gleitkörper aus den Laufbahnen zwischen jeweils zwei gegeneinander verfahrbaren Schienenelementen und eine Trennung der gegeneinander verfahrbaren Schienenelemente zu verhindern. Die Auszugs- und Einschubbegrenzer können in der für herkömmliche Teleskopschienen bekannten Art und Weise ausgeführt sein. In einer bevorzugten Ausführungsform der erfindungsgemäßen Linearführung sind die Auszugs- und Einschubbegrenzer als von den Schienenelementen in die Laufbahn hineinragende Zapfen ausgebildet. Die Schienenelemente können so weit verfahren, bis die Zapfen an den äußersten Wälzkörper in der Laufbahn anstoßen. Vorzugsweise weist die sogenannte Innenschiene an dem in Ausfahrrichtung gelegenen Ende einen von der Lauffläche in die Laufbahn hineinragenden Zapfen auf, an den der in Ausfahrrichtung erste Wälzkörper beim Ausfahren der Linearführung anstößt, so dass die Wälzkörper und Gleitkörper nicht aus den Laufbahnen zwischen den zwei gegeneinander verfahrbaren Schienenelementen herausgeschoben werden können. Die sogenannte Außenschiene weist vorzugsweise an dem in Einfahrrichtung gelegenen Ende einen von der Lauffläche in die Laufbahn hineinragenden Zapfen auf, der beim Ausfahren der Linearführung an den in Ausfahrrichtung letzten Wälzkörper beim Ausfahren der Linearführung anstößt und somit den Verfahrweg der Schienenelemente in Ausfahrrichtung begrenzt. Die Außenschiene weist weiterhin vorzugsweise einen Einschubbegrenzer, der von der Lauffläche in die Laufbahn hineinragt und beim Einfahren der Linearführung an den in Einfahrrichtung letzten Wälzkörper beim Einfahren der Linearführung anstößt und somit den Verfahrweg der Schienenelemente in Einfahrrichtung begrenzt.

In einer weiteren bevorzugten Ausführungsform der erfindungsgemäßen Linearführung sind an den Schienenelementen Rasteinrichtungen für das lösbare Verrasten der gegeneinander verfahrenbaren Schienenelemente in wenigstens einer Verfahrposition vorgesehen. Rasteinrichtungen können in jeder Art und Weise, wie sie auch für herkömmliche Teleskopschienen bekannt sind, ausgeführt sein. In einer bevorzugten Ausführungsform umfassen die Rasteinrichtungen ein an einem ersten Schienenelement mittels eines Federelementes vorgespanntes Rastelement, z. B. eine Kugel, und an dem zweiten Schienenelement, welches gegenüber dem ersten Schienenelement verfahrbar ist, wenigstens eine Ausnehmung für das Ineingriffbringen des Rastelementes. Bei dieser Ausführungsform ist vorzugsweise eine Feder an der Innenfläche eines Schienenelementes befestigt, wobei die Feder an ihrem freien Ende eine Kugel oder ein anderes Rastelement befestigt aufweist. Das andere Schienenelement, gegen welches die Kugel bzw. das Rastelement an dem ersten Schienenelement beim Verfahren der Schienenelemente anliegt und gleitet, besitzt Prägungen oder Bohrungen, in die das Rastelement teilweise eintauchen kann, wenn die jeweilige Prägung oder Bohrung darüber zu liegen kommt. Es werden für die erfindungsgemäße Linearführung Rastpositionen festgelegt, bei denen das Verfahren der Linearführung aus diesen Rastpositionen eine höhere Anfangskraft erfordert und die bestimmte Stellungen des mit der Linearführung geführten Gegenstandes, beispielsweise eines Ausziehtisches, vorgibt. Zweckmäßig sind beispielsweise Rastpositionen bei vollständig ausgefahrener und/oder vollständig eingefahrener Linearführung, aber auch gegebenenfalls in Zwischenpositionen.

In einer weiteren bevorzugten Ausführungsform der erfindungsgemäßen Linearführung sind die Schienenelemente aus Leichtmetall, vorzugsweise aus Aluminium, hergestellt. Diese Ausführungsform eignet sich besonders für Anwendungen, bei denen es auf das leichte Gewicht der Bauteile ankommt, wie beispielsweise in Verkehrsmitteln, insbesondere in Flugzeugen.

In einer alternativen bevorzugten Ausführungsform der erfindungsgemäßen Linearführung umfasst die Linearführung genau zwei in Längsrichtung gegeneinander verfahrbare Schienenelemente, nämlich ein Innenschienenelement und ein das Innenschienenelement umgreifendes Außenschienenelement, wobei das Außenschienenelement biegeelastisch ist und aus gebogenem Stahlblech oder gebogenem Leichtmetallblech hergestellt ist und das Innenschienenelement vorzugsweise aus Leichtmetall, besonders bevorzugt aus Aluminium hergestellt ist.

Schienenelemente aus Leichtmetall, beispielsweise aus Aluminium, können aus dem Vollmaterial gefräst oder durch andere dem Fachmann als geeignet bekannte spanabhebende Verfahren hergestellt werden und sind sehr biegesteif. Erfindungsgemäß bevorzugt ist das Innenschienenelement aus diesem Material und auf diese Weise hergestellt. Schienenelemente aus Leichtmetall haben gegenüber solchen aus Stahl ein wesentlich geringeres Gewicht und bieten daher erhebliche Vorteile in Anwendungen, bei denen es auf das leichte Gewicht der Bauteile ankommt.

Die erfindungsgemäße Ausführungsform, bei der das Außenschienenelement aus gebogenem Stahlblech oder gebogenem Leichtmetallblech hergestellt ist, hat gegenüber Ausführungsformen, bei denen alle Schienenelemente aus Leichtmetall durch spanabhebende Bearbeitung gefertigt sind, zwar ein materialbedingt etwas höheres Gewicht, jedoch ist das Außenschienenelement aus gebogenem Stahlblech oder gebogenem Leichtmetallblech wesentlich biegeelastischer als ein aus Leichtmetall durch spanabhebende Bearbeitung hergestelltes Schienenelement. Diese Biegeelastizität des Außenschienenelements verleiht der Linearführung wesentliche Vorteile, die in vielen Anwendungen, wie beispielsweise in Ausziehtischen in Verkehrsmitteln, die Gewichtsvorteile einer ausschließlich mit Leichtmetallschienenelementen gefertigten Linearführung überwiegen können. Die Vorteile dieser Ausführungsform kommen besonders zum Tragen, wenn die Wälzkörper einen Durchmesser aufweisen, der größer ist als der Durchmesser der Gleitkörper. Durch die Möglichkeit des Aufweitens des biegeelastischen Außenschienenelements, welches durch die Kraftübertragung der Wälzkörper auf die Außenschiene hervorgerufen wird, kommen die Gleitkörper, die im Vergleich zu den Wälzkörpern einen kleineren Durchmesser haben, in Eingriff mit dem Schienenelement. Dadurch werden Lasten, welche über die üblichen Betriebslasten hinaus gehen, von den Gleitkörpern aufgenommen und somit ein Überlastschutz erzielt, wobei der wesentliche Vorteil darin besteht, das zu hohe Belastungen durch z. B. auftretende Flächenpressungen an den Kontaktstellen der Wälzkörper vermieden werden. Dieser Effekt tritt in der vertikalen Hauptbelastungsrichtung auf, aber auch bei einem Verkanten der Führungen, ausgelöst durch eine z. B. zu hohe asymmetrischer Krafteinleitung beim Verschieben der Elemente.

Die Erfindung umfasst auch einen Ausziehtisch, vorzugsweise für die Befestigung an der Rückenlehne eines Sitzes in einem Verkehrsmittel, wie einem Bahn-, Bus- oder Flugzeugsitz, mit einer Tischplatte und zwei für ein Verfahren der Tischplatte relativ zu der Rückenlehne des Sitzes seitlich an oder unter der Tischplatte montierten Linearführungen gemäß der vorliegenden Erfindung.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren.
- Figur 1: zeigt eine erfindungsgemäße Linearführung in ausgefahrenem Zustand in einer Ansicht von der Seite;
- Figur 2: zeigt die erfindungsgemäße Linearführung gemäß Figur 1 in eingefahrenem Zustand in einer Ansicht von der Seite mit einer teilweise weggeschnittenen Ansicht auf Wälz- und Gleitkörper sowie einer teilweise weggeschnittenen Ansicht auf die Rasteinrichtung;
- Figur 3: zeigt die erfindungsgemäße Linearführung gemäß Figur 1 in ausgefahrenem Zustand in einer Ansicht schräg von oben.
- Figur 4: zeigt eine bevorzugte alternative Ausführungsform einer erfindungsgemäßen Linearführung schematisch in einem Querschnitt durch die Schienenelemente und ein Kugelpaar mit einem Innenschienenelement aus Leichtmetall und einem das Innenschienenelement umgreifenden Außenschienenelement, welches biegeelastisch und aus gebogenem Stahlblech hergestellt ist.

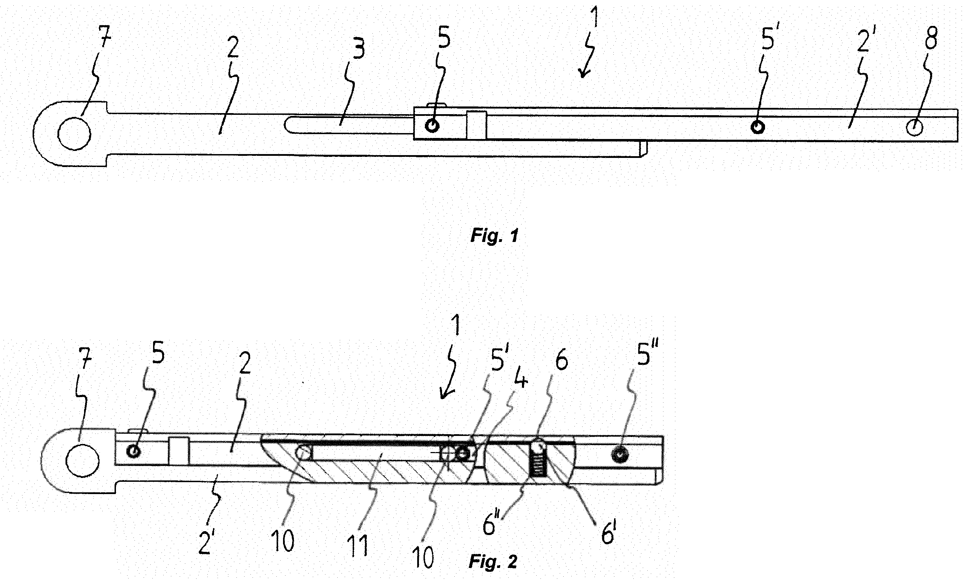

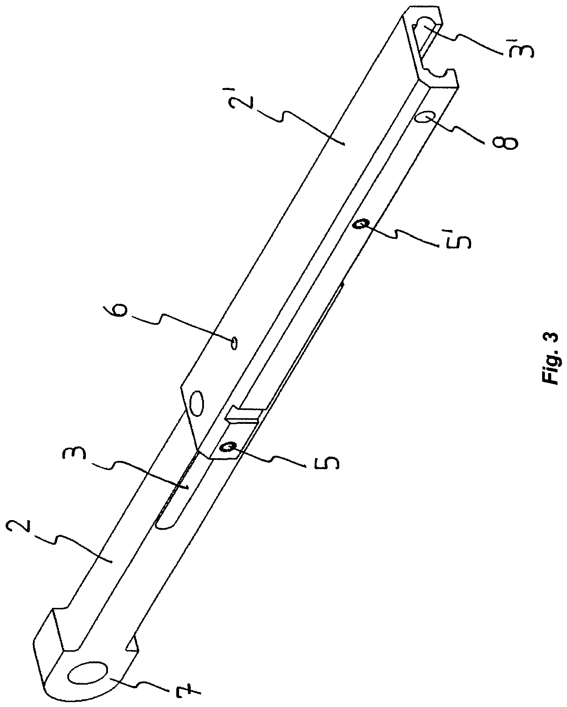

Die erfindungsgemäße Linearführung gemäß den Figuren 1 bis 3 weist ein Innenschienenelement 2 und ein dazu in Längsrichtung verfahrbares Außenschienenelement 2' auf. Das Innenschienenelement 2 besitzt auf beiden Seiten des Schienenelementes jeweils eine Lauffläche 3, die mit auf der Innenseite der Außenschiene 2' angeordneten weiteren Laufflächen 3' zwei einander gegenüberliegende Laufbahnen 4 für die Aufnahme von Wälzkörpern 10 und Gleitkörpern 11 bildet. Bei dieser Ausführungsform der erfindungsgemäßen Linearführung sind in jeder Laufbahn 4 zwei als Kugeln ausgebildete Wälzkörper 10 und ein im Wesentlichen zylindrischer Gleitkörper 11 mit in Längsersteckung der Laufbahn 4 im Wesentlichen kreisförmigem Querschnitt angeordnet. In Längsrichtung der Laufbahn 4 ist auf beiden Seiten des Gleitkörpers 11 jeweils genau ein Wälzkörper 10 angeordnet. Die teilweise weggeschnittene Ansicht in Figur 2 zeigt einen Blick auf die Wälz- und Gleitkörper 10 und 11 in der Laufbahn 4.

An den Schienenelementen 2 und 2' sind Auszugs- und Einschubbegrenzer 5, 5' und 5" vorgesehen, die als von den jeweiligen Laufflächen 3 und 3' der Schienenelemente 2 und 2' in die Laufbahn 4 hineinragende Zapfen ausgebildet sind. Die Außenschiene 2' weist einen Auszugsbegrenzer 5 und einen Einschubbegrenzer 5' auf, deren Lage beispielsweise in der Seitenansicht der Figur 1 zu sehen ist, da die Begrenzer 5 und 5' durch Öffnungen in der Seitenwand des Au-ßenschienenelementes eingeschraubt bzw. eingesetzt werden. Der Auszugsbegrenzer 5" an der Innenschiene 2 ist in Figur 2 durch eine in der Seitenwand der Außenschiene 2' vorgesehene Montageöffnung 8 zu sehen. Der Auszugsbegrenzer 5" wird an der Lauffläche 3 der Innenschiene 2 durch die Montageöffnung 8 hindurch befestigt, nachdem die Schienenelemente 2 und 2' mit den Wälz- und Gleitkörpern 10 und 11 zusammengefügt worden sind. Die Auszugs- und Einschubbegrenzer 5, 5' und 5" begrenzen den Verfahrweg der Schienenelemente 2 und 2' gegeneinander und verhindern ein Herausfahren der Wälzkörper 10 und Gleitkörper 11 aus den Laufbahnen 4.

Die weitere teilweise weggeschnittene Ansicht in Figur 2 zeigt einen Blick auf eine Rasteinrichtung 6, 6', 6" für das lösbare Verrasten der gegeneinander verfahrbaren Schienenelemente 2 und 2' in wenigstens einer Verfahrposition. Die Rasteinrichtung besteht in dieser Ausführungsform aus einer als Durchgangsbohrung ausgeführten Ausnehmung 6 in der Rückenwand des Außenschienenelements 2' und einem hier als Kugel ausgebildeten Rastelement 6', welches mittels eines an dem Innenschienenelement 2 befestigten und daran abgestützten Federelements 6" in Richtung der Rückenwand des Außenschienenelements 2' vorgespannt ist. Wenn die durch das Federelement 6" vorgespannte Kugel 6' beim Verfahren der Schienenelemente 2 und 2' über der Ausnehmung 6 zu liegen kommt, tritt sie mit dieser in Eingriff, so dass die Linearführung je nach Kraft des Federelementes 6" mehr oder weniger fest gegen ein Verfahren aus dieser Position heraus gesichert ist. Für das weitere Verfahren der Schienenelemente 2 und 2' aus dieser Rastposition heraus ist eine größere Anfangskraft für das Außereingriffbringen des Rastelementes 6' und der Ausnehmeung 6 aufzubringen als für das Verfahren aus einer anderen als der Rastposition. Außerhalb der Rastpositionen sorgt das Andrücken des Rastelementes 6' an die Rückenwand des Schienenelementes 2' durch die Kraft des Federelementes 6" dafür, dass ein Grundwiderstand für das Verfahren der Schienenelemente 2 und 2' vorliegt, wodurch dem Benutzer eine angenehme Haptik vermittelt und ein zu leichtgängiges Verfahren der Schienenelemente 2 und 2' verhindert wird.

Die in den Figuren 1 bis 3 dargestellte Ausführungsform der erfindungsgemäßen Linearführung weist weiterhin ein Scharnierelement 7 am Ende des Innenschienenelements 2 auf, das sich beispielsweise zur Befestigung der Linearführung 1 an der Rückenlehne eines Sitzes in einem Verkehrsmittel, wie einem Bahn-, Bus- oder Flugzeugsitz, eignet. An einem Paar von derart befestigten Linearführungen kann beispielsweise die Tischplatte eines Ausziehtisches montiert werden. Die erfindungsgemäße Linearführung kann je nach Anwendung jedoch auch ohne das Scharnierelement 7 mit oder ohne eine alternative Befestigungseinrichtung ausgeführt sein.

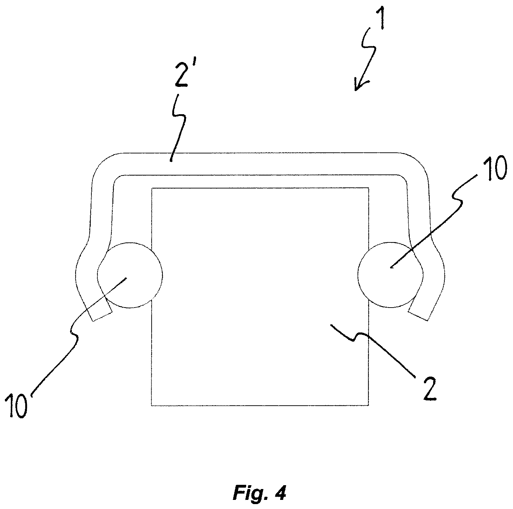

Die in Figur 4 dargestellte alternative Ausführungsform einer erfindungsgemäßen Linearführung umfasst zwei Schienenelemente 2 und 2', wobei das Innenschienenelement 2 wie bei den Linearführungen gemäß den Figuren 1 bis 3 aus Leichtmetall, nämlich hier aus Aluminium, hergestellt ist, aber das Außenschienenelement 2', welches das Innenschienenelement 2 umgreift, biegeelastisch ist und aus gebogenem Stahlblech hergestellt ist mit einem im Querschnitt im Wesentlichen C-förmigen Profil. Die Biegeelastizität bietet die hierin oben beschriebenen Vorteile.

### Bezugszeichenliste

- 1: Linearführung
- 2, 2': Schienenelemente
- 3, 3': Laufflächen
- 4: Laufbahnen
- 5, 5', 5": Auszugs- und Einschubbegrenzer
- 6, 6', 6": Rasteinrichtungen
- 7: Scharnierelement
- 8: Montageöffnung
- 10: Wälzkörper
- 11: Gleitkörper

## Patentansprüche

1. Linearführung (1) mit wenigstens zwei in Längsrichtung gegeneinander verfahrbaren Schienenelementen (2, 2'), wobei jedes Schienenelement (2, 2') Laufflächen (3, 3') aufweist, die mit Laufflächen (3, 3') eines dagegen verfahrbaren Schienenelementes (2, 2') Laufbahnen (4) für die Aufnahme von Wälzkörpern (10) und Gleitkörpern (11) zwischen den jeweils zwei gegeneinander verfahrbaren Schienenelementen ausbilden, **dadurch gekennzeichnet, dass** in jeder Laufbahn (4) zwischen zwei Schienenelementen (2, 2') wenigstens ein Gleitkörper (11) und wenigstens zwei Wälzkörper (10) vorgesehen sind, wobei in Längsrichtung der Laufbahn (4) auf beiden Seiten eines Gleitkörpers (11) jeweils wenigstens ein Wälzkörper (10) angeordnet ist.

2. Linearführung nach Anspruch 1, **dadurch gekennzeichnet, dass** die Wälzkörper (10) als Kugeln und/oder dass die Gleitkörper (11) im Wesentlichen zylindrisch mit in Längsersteckung der Laufbahn (4) im Wesentlichen kreisförmigem Querschnitt ausgebildet sind.

3. Linearführung nach einem der Ansprüche 1 und 2, **dadurch gekennzeichnet, dass** die Wälzkörper (10) aus Kunststoff, vorzugsweise aus Polytetrafluorethylen (PTFE), Polyoxymethylen/Polyacetat (POM) oder Polyamid, und/oder dass die Gleitkörper (11) aus Metall, vorzugsweise aus Messing, oder aus Kunststoff, vorzugsweise aus Polytetrafluorethylen (PTFE), Polyoxymethylen/Polyacetat (POM) oder Polyamid hergestellt sind.

4. Linearführung nach einem der vorangegangenen Ansprüche, **dadurch gekennzeichnet, dass** die Wälzkörper (10) aus einem elastischeren und/oder weicheren Material hergestellt sind als die Gleitkörper (11).

5. Linearführung nach einem der vorangegangenen Ansprüche, **dadurch gekennzeichnet, dass** senkrecht zur Längsersteckung der Laufbahn (4) zwischen zwei Laufflächen (3, 3') die Wälzkörper (10) einen Durchmesser aufweisen, der größer oder gleich, vorzugsweise größer ist als der Durchmesser der Gleitkörper (11).

6. Linearführung nach einem der vorangegangenen Ansprüche, **dadurch gekennzeichnet, dass** in jeder Laufbahn (4) zwischen zwei Schienenelementen (2, 2') genau ein Gleitkörper (11) und auf beiden Seiten des Gleitkörpers (11) jeweils wenigstens ein Wälzkörper (10), vorzugsweise genau ein Wälzkörper (10) angeordnet ist.

7. Linearführung nach einem der Ansprüche 1 bis 5, **dadurch gekennzeichnet, dass** in jeder Laufbahn (4) zwischen zwei Schienenelementen (2, 2') zwei oder mehr Gleitkörper (11) und auf beiden Seiten jedes Gleitkörpers (11) jeweils wenigstens ein Wälzkörper (10), vorzugsweise genau ein Wälzkörper (10) angeordnet sind.

8. Linearführung nach einem der vorangegangenen Ansprüche, **dadurch gekennzeichnet, dass** an den Schienenelementen (2, 2') Auszugs- und Einschubbegrenzer (5, 5', 5") vorgesehen sind, welche den Verfahrweg zweier Schienenelemente (2, 2') gegeneinander begrenzen, um ein Herausfahren der Wälzkörper (10) und Gleitkörper (11) aus den Laufbahnen (4) zwischen den jeweils zwei gegeneinander verfahrbaren Schienenelementen (2, 2') und eine Trennung der gegeneinander verfahrbaren Schienenelemente zu verhindern.

9. Linearführung nach einem der vorangegangenen Ansprüche, **dadurch gekennzeichnet, dass** an den Schienenelementen (2, 2') Rasteinrichtungen (6, 6', 6") für das lösbare Verrasten der gegeneinander verfahrbaren Schienenelemente (2, 2') in wenigstens einer Verfahrposition vorgesehen sind, wobei die Rasteinrichtungen (6, 6', 6") vorzugsweise ein an einem ersten Schienenelement (2') mittels eines Federelementes (6") vorgespanntes Rastelement (6'), z.B. eine Kugel, und an dem zweiten Schienenelement (2) wenigstens eine Ausnehmung (6) für das Ineingriffbringen des Rastelements umfassen.

10. Linearführung nach einem der vorangegangenen Ansprüche, **dadurch gekennzeichnet, dass** die Schienenelemente (2, 2') aus Leichtmetall, vorzugsweise aus Aluminium hergestellt sind.

11. Linearführung nach einem der Ansprüche 1 bis 9, **dadurch gekennzeichnet, dass** die Linearführung (1) genau zwei in Längsrichtung gegeneinander verfahrbare Schienenelemente (2, 2') umfasst, nämlich ein Innenschienenelement (2) und ein das Innenschienenelement (2) umgreifendes Außenschienenelement (2'), wobei das Außenschienenelement (2') biegeelastisch ist und aus gebogenem Stahlblech oder gebogenem Leichtmetallblech hergestellt ist und das Innenschienenelement (2) vorzugsweise aus Leichtmetall, besonders bevorzugt aus Aluminium hergestellt ist.

12. Ausziehtisch, vorzugsweise für die Befestigung an der Rückenlehne eines Sitzes in einem Verkehrsmittel, wie einem Bahn-, Bus- oder Flugzeugsitz, mit einer Tischplatte und zwei für ein Verfahren der Tischplatte relativ zu der Rückenlehne des Sitzes seitlich an oder unter der Tischplatte montierten Linearführungen nach einem vorangegangenen Ansprüche.

## Claims

1. A linear guide (1) having at least two rail elements (2, 2') which are displaceable relative to each other in the longitudinal direction, wherein each rail element (2, 2') has running surfaces (3, 3') which with running surface (3, 3') of a rail element (2, 2') moveable relative thereto form running tracks (4) for receiving rolling bodies (10) and sliding bodies (11) between the respective two relatively displaceable rail elements, **characterised in that** at least one sliding body (11) and at least two rolling bodies (10) are provided in each running track (4) between two rail elements (2, 2'), wherein at least one respective rolling body (10) is arranged on both sides of a sliding body (11) in the longitudinal direction of the running track (4).

2. A linear guide as set forth in claim 1 **characterised in that** the rolling bodies (10) are in the form of balls and/or that the sliding bodies (11) are substantially cylindrical with a cross-section which is substantially circular in the longitudinal extent of the running track (4).

3. A linear guide as set forth in one of claims 1 and 2 **characterised in that** the rolling bodies (10) are made from plastic material, preferably from polytetrafluorethylene (PTFE), polyoxymethylene/polyacetate (POM) or polyamide, and/or that the sliding bodies (11) are made from metal, preferably brass, or from plastic, preferably polytetrafluorethylene (PTFE), polyoxymethylene/polyacetate (POM) or polyamide.

4. A linear guide as set forth in one of the preceding claims **characterised in that** the rolling bodies (10) are made from a more elastic and/or softer material than the sliding bodies (11) .

5. A linear guide as set forth in one of the preceding claims **characterised in that** perpendicularly to the longitudinal extent of the running track (4) between two running surfaces (3, 3') the rolling bodies (10) are of a diameter which is greater than or equal to, preferably greater than, the diameter of the sliding bodies (11).

6. A linear guide as set forth in one of the preceding claims **characterised in that** precisely one sliding body (11) is arranged in each running track (4) between two rail elements (2, 2') and at least one respective rolling body (10), preferably precisely one rolling body (10), is arranged on both sides of the sliding body (11).

7. A linear guide as set forth in one of claims 1 through 5 **characterised in that** two or more sliding bodies (11) are arranged in each running track (4) between two rail elements (2, 2') and at least one respective rolling body (10), preferably precisely one rolling body (10), is arranged on both sides of each sliding body (11).

8. A linear guide as set forth in one of the preceding claims **characterised in that** provided at the rail elements (2, 2') are pull-out and push-in limiting means (5, 5', 5") which limit the displacement travel of two rail elements (2, 2') relative to each other to prevent the rolling bodies (10) and sliding bodies (11)from moving out of the running tracks (4) between the respective two relatively displaceable rail elements (2, 2') and separation of the relatively displaceable rail elements.

9. A linear guide as set forth in one of the preceding claims **characterised in that** provided at the rail elements (2, 2') are latching devices (6, 6', 6") for releasable latching of the relatively displaceable rail elements (2, 2') in at least one displacement position, wherein the latching devices (6, 6', 6") preferably include a latching element (6'), for example a ball, which is biased on a first rail element (2') by means of a spring element (6"), and on the second rail element (2) at least one opening (6) for engagement of the latching element therein.

10. A linear guide as set forth in one of the preceding claims **characterised in that** the rail elements (2, 2') are made from light metal, preferably from aluminum.

11. A linear guide as set forth in one of claims 1 through 9 **characterised in that** the linear guide (1) includes precisely two rail elements (2, 2') which are displaceable relative to each other in the longitudinal direction, namely an inner rail element (2) and an outer rail element (2') embracing the inner rail element (2), wherein the outer rail element (2') is flexurally elastic and is made from bent steel sheet or bent light metal sheet and the inner rail element (2) is preferably made from light metal, particularly preferably from aluminum.

12. A pull-out table, preferably for fixing to the backrest of a seat in a transport means like a train, bus or aircraft seat, comprising a table top and two linear guides as set forth in one of the preceding claims, that are mounted to or under the table top laterally for displacement of the table top relative to the backrest of the seat.

## Revendications

1. Guide linéaire (1) avec au moins deux éléments de rail (2, 2') adaptés pour pouvoir être déplacés l'un par rapport à l'autre dans la direction longitudinale, chacun des éléments de rail (2, 2') comprenant des surfaces de roulement (3, 3') qui forment avec des surfaces de roulement (3, 3') d'un élément de rail (2, 2') déplaçable par rapport au premier, des pistes de roulement (4) pour recevoir des corps roulants (10) et des corps glissants (11) entre deux éléments de rail respectifs adaptés pour pouvoir être déplacés l'un par rapport à l'autre, **caractérisé en ce que** sont prévus dans chaque piste de roulement (4) entre deux éléments de rail (2, 2'), au moins un corps glissant (11) et au moins un corps roulant (10), au moins un corps roulant (10) étant disposé, dans la direction longitudinale de la piste de roulement (4), sur chaque côté d'un corps glissant (11).

2. Guide linéaire selon la revendication 1, **caractérisé en ce que** les corps roulants (10) sont formés comme des billes et/ou **en ce que** les corps glissants (11) sont formés essentiellement de façon cylindrique avec, dans l'étendue longitudinale de la piste de roulement (4), une section transversale essentiellement circulaire.

3. Guide linéaire selon l'une des revendications 1 et 2, **caractérisé en ce que** les corps roulants (10) sont fabriqués en une matière synthétique, de préférence en polytétrafluoroéthylène (PTFE), polyoxyméthylène/polyacétal (POM) ou polyamide, et/ou **en ce que** les corps glissants (11) sont fabriqués en métal, de préférence en laiton, ou en matière synthétique, de préférence en polytétrafluoréthylène (PTFE), polyoxyméthylène/polyacétal (POM) ou polyamide.

4. Guide linéaire selon l'une des revendications précédentes, **caractérisé en ce que** les corps roulants (10) sont fabriqués en un matériau plus élastique et/ou plus souple que les corps glissants (11).

5. Guide linéaire selon l'une des revendications précédentes, **caractérisé en ce que**, perpendiculairement à l'étendue longitudinale de la piste de roulement (4), les corps roulants (10) présentent entre deux surfaces de roulement (3, 3') un diamètre qui est supérieur ou égal, de préférence supérieur, au diamètre des corps glissants (11).

6. Guide linéaire selon l'une des revendications précédentes, **caractérisé en ce que**, dans chaque piste de roulement (4), est disposé entre deux éléments de rail (2, 2') exactement un corps glissant (11) et, de chaque côté du corps glissant (11), respectivement au moins un corps roulant (10), de préférence exactement un corps roulant (10).

7. Guide linéaire selon l'une des revendications 1 à 5, **caractérisé en ce que**, dans chaque piste de roulement (4), sont disposés entre deux éléments de rail (2, 2') deux ou davantage de corps glissants (11) et, de chaque côté de chaque corps glissant (11), respectivement au moins un corps roulant (10), de préférence exactement un corps roulant (10).

8. Guide linéaire selon l'une des revendications précédentes, **caractérisé en ce que** sont prévus sur les éléments de rail (2, 2'), des éléments de limitation de déploiement et de rétraction (5, 5', 5") qui limitent le trajet de déplacement de deux éléments de rail (2, 2') l'un par rapport à l'autre, pour éviter une sortie des corps roulants (10) et des corps glissants (11) des pistes de roulement (4) entre les éléments de rail (2, 2') déplaçables l'un par rapport à l'autre, et une séparation des éléments de rail déplaçables l'un par rapport à l'autre.

9. Guide linéaire selon l'une des revendications précédentes, **caractérisé en ce que** sont prévus sur les éléments de rail (2, 2'), des dispositifs d'encliquetage (6, 6', 6") pour l'encliquetage amovible des éléments de rail (2, 2') déplaçables l'un par rapport à l'autre, dans au moins une position de déplacement, les éléments d'encliquetage (6, 6', 6") comprenant de préférence un élément d'encliquetage (6'), par exemple une bille, précontraint par un élément de ressort (6") sur un premier élément de rail (2') et, sur le deuxième élément de rail (2), au moins un évidement (6) pour la mise en engagement de l'élément d'encliquetage.

10. Guide linéaire selon l'une des revendications précédentes, **caractérisé en ce que** les éléments de rail (2, 2') sont fabriqués en métal léger, de préférence en aluminium.

11. Guide linéaire selon l'une des revendications 1 à 9, **caractérisé en ce que** le guide linéaire (1) comprend exactement deux éléments de rail (2, 2') adaptés pour pouvoir être déplacés l'un par rapport à l'autre dans la direction longitudinale, à savoir un élément de rail intérieur (2) et un élément de rail extérieur (2') entourant l'élément de rail intérieur (2), l'élément de rail extérieur (2') étant élastique en flexion et fabriqué en une tôle d'acier pliée ou en une tôle de métal léger pliée et l'élément de rail intérieur (2) étant fabriqué de préférence en métal léger, de préférence en aluminium.

12. Table extensible, de préférence pour être fixée sur le dossier d'un siège dans un moyen de transport, tel qu'un siège de train, de bus ou d'avion, avec un plateau de table et deux guides linéaires selon l'une des revendications précédentes, montés latéralement sur ou en-dessous du plateau de table pour un déplacement du plateau de table par rapport au dossier du siège.
